# EUROPÄISCHE PATENTSCHRIFT

(11) **EP 2 652 313 B1**
(45) Veröffentlichungstag und Bekanntmachung des Hinweises auf die Patenterteilung: **11.02.2015**
(21) Anmeldenummer: 11805368.5
(22) Anmeldetag: 06.12.2011
(51) Int. Cl.: F03B 3/18

(54) **SPIRALGEHÄUSE EINER STRÖMUNGSMASCHINE UND VERFAHREN ZUR FERTIGUNG EINES SPIRALGEHÄUSES EINER STRÖMUNGSMASCHINE**
SPIRAL CASING OF A TURBOMACHINE, AND METHOD FOR PRODUCING A SPIRAL CASING OF A TURBOMACHINE
VOLUTE DE TURBOMACHINE ET PROCÉDÉ DE FABRICATION D'UNE VOLUTE DE TURBOMACHINE

(30) Priorität: 17.12.2010 AT 20832010
(43) Veröffentlichungstag der Anmeldung: 23.10.2013
(73) Patentinhaber: Andritz Hydro GmbH, 1141 Wien (AT)
(72) Erfinder: RIPPL, Andreas, 88213 Ravensburg (DE); HALLER, Tobias, 89231 Neu-Ulm (DE); RÖLLE, Benjamin, 88299 Leutkirch (DE)
(74) Vertreter: Schweinzer, Friedrich
(86) Internationale Anmeldenummer: PCT/AT2011/000486
(87) Internationale Veröffentlichungsnummer: WO 2012/079098

(56) Entgegenhaltungen:
- WO-A1-2010/122026
- CH-A- 322 758
- DE-B- 1 258 360
- GB-A- 254 464
- US-A- 4 135 853

## Beschreibung

Die Erfindung betrifft ein Spiralgehäuse einer Strömungsmaschine, insbesondere Turbine, Pumpe oder Pumpturbine, die aus einer Anzahl von in Umfangsrichtung hintereinander angeordneten und an den jeweiligen Stirnseiten miteinander verbundenen Segmenten besteht, mit Leiteinrichtungen am Einlauf zu den Stützschaufeln. Weiters betrifft die Erfindung ein Verfahren zur Fertigung eines Spiralgehäuses einer Strömungsmaschine und deren Leiteinrichtungen.

Derartige Spiralgehäuse sind z.B. aus der DE-AS 1 258 360 bekannt. Die Stützschaufelwangen (Vorleitschaufelringkränze) werden hier als Parallelplatte ausgeführt. Zur Verbesserung des hydraulischen Wirkungsgrades werden Leitbleche aus Stahl eingesetzt, die mittels Verschraubung an angeschweißten Rippen befestigt sind. Diese Leitbleche weisen einige Nachteile auf. Aufgrund der relativ hohen Ungenauigkeit bei Aussagen zur hydraulischen Belastung der Leitbleche ist die bisherige Konstruktion anfällig für Kerbspannungen, die unter der vorliegenden dynamischen Belastung zu einem Risswachstum und damit Versagen der Leitbleche führen können. Weiters kann es bei einem Versagen der Befestigung der Leitbleche zu einem größeren Schaden in der Turbine kommen.
Ziel der Erfindung ist es, eine Verbesserung des hydraulischen Wirkungsgrades bei gleichzeitiger Reduktion der Schadensanfälligkeit zu erreichen.
Die Erfindung ist daher dadurch gekennzeichnet, dass einzelne Leitsegmente vorgesehen sind, die aus Kunststoff bestehen.
Durch die Fertigung der einzelnen Leitsegmente aus Kunststoff kann die Schadenshäufigkeit einerseits und die Schadenshöhe andererseits wesentlich reduziert werden.
Eine günstige Weiterbildung der Erfindung ist dadurch gekennzeichnet, dass die Leitsegmente aus Kunststoff gegossen sind. Dadurch ist eine einfache und kostengünstige Herstellung der Leitsegmente möglich.
Eine günstige Ausgestaltung der Erfindung ist dadurch gekennzeichnet, dass die Leitsegmente mit der am Einlauf der Stützschaufel angeordneten Stützschaufelwange verschraubt sind, wobei die Leitsegmente Buchsen zur Verschraubung aufweisen können.
Eine günstige Weiterbildung der Erfindung ist dadurch gekennzeichnet, dass die Leitsegmente an die Form des Spiralgehäuses angepasst sind. Dadurch weisen die einzelnen Leitelementsegmente dann die passende Form auf.
Die Erfindung betrifft auch ein Verfahren zur Fertigung eines Spiralgehäuses einer Strömungsmaschine und deren Leiteinrichtungen. Es ist erfindungsgemäß dadurch gekennzeichnet, dass Leitsegmente aus Kunststoff gegossen werden. Dadurch ist eine einfache und kostengünstige Herstellung der Leitsegmente möglich.
Eine vorteilhafte Weiterbildung der Erfindung ist dadurch gekennzeichnet, dass im Spiralgehäuse eine Verschalung, insbesondere segmentweise, angebracht und mit Kunststoff ausgegossen wird, wodurch Leitsegmente geformt werden, wobei die erzeugten Leitsegmente anschließend aus der Verschalung entnommen und verputzt werden können.
Eine günstige Ausgestaltung der Erfindung ist dadurch gekennzeichnet, dass die Leitsegmente mit der am Einlauf der Stützschaufel angeordneten Stützschaufelwange verschraubt werden.
Eine alternative Ausgestaltung des erfindungsgemäßen Verfahrens ist dadurch gekennzeichnet, dass die Leitsegmente in einer Form gegossen werden, wobei die gegossenen Leitsegmente durch mechanische Bearbeitung an die sich umlaufend verändernde Spiralkontur angepasst werden können. Durch das Giessen der Segmente in eine Form, die für alle Segmente gleich ist und eine nachträgliche Anpassung an die Spiralkontur, ist eine Optimierung der Kosten (Serienfertigung) sowie auch des Gussvolumens mit Hinblick auf Materialeinsparung möglich.

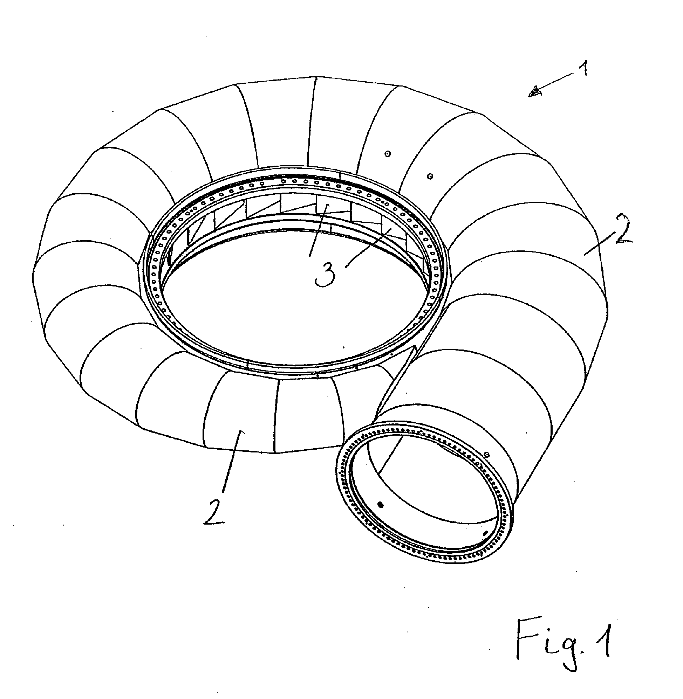

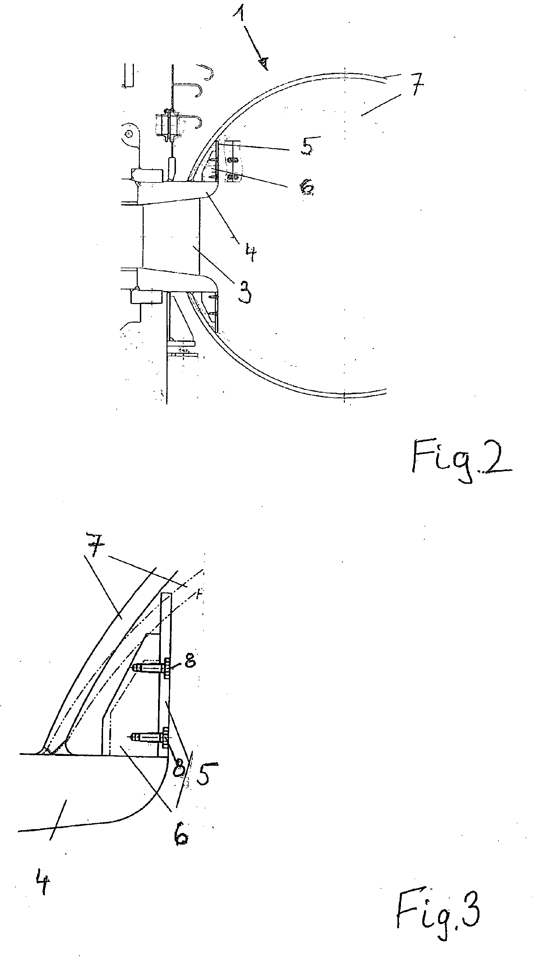

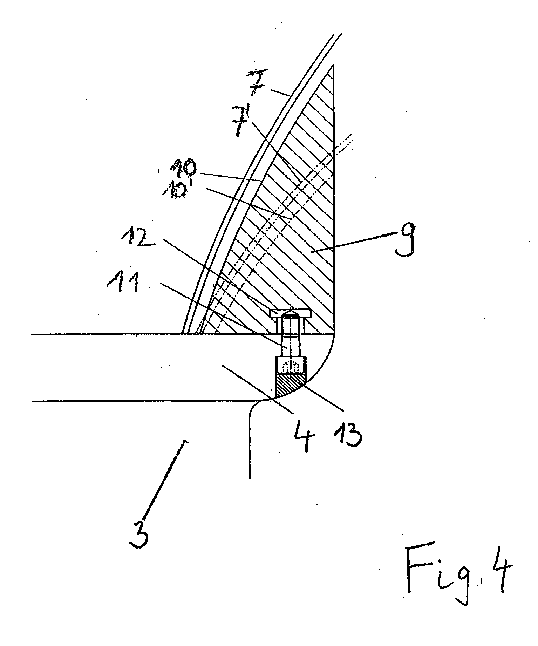

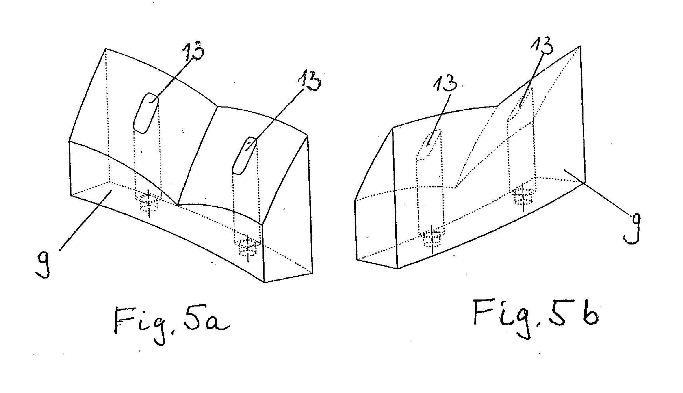

Die Erfindung wird nun anhand der Zeichnungen beispielhaft beschrieben, wobei Fig. 1 eine Einlaufspirale einer Wasserturbine, bei der die Erfindung eingesetzt wird, Fig. 2 den Bereich der Spirale mit Stützschaufel und Stützschaufelwange sowie einem Leitelement nach dem Stand der Technik,Fig. 3 einen Ausschnitt aus Fig. 2,Fig. 4 einen Ausschnitt gemäß der Erfindung analog Fig. 3,Fig. 5 a und Fig. 5b Ansichten der Leitsegmente gemäß der Erfindung darstellen.

Fig. 1 zeigt eine Einlaufspirale 1 einer Wasserturbine, bei der die Erfindung eingesetzt wird. Diese besteht aus einer Anzahl von Segmenten 2, deren Querschnittsfläche in Umfangrichtung vom Einlauf her abnimmt. Die Einlaufspirale 1 weist auch Stützschaufeln 3 auf, die fix mit den Stützschaufelwangen verschweisst sind. In Fig. 2 ist der Bereich der Spirale 1 nach dem Stand der Technik mit Stützschaufel 3 und Stützschaufelwange 4 sowie einem Leitelement 5, das hier als Leitblech ausgebildet ist, dargestellt. Das Leitelement 5 ist zylinderförmig ausgeführt und über mehrere am Umfang angeordnete und mit der Stützschaufelwange verbundene Befestigungsrippen 6 befestigt. Fig. 3 zeigt diese Befestigung nochmals im Detail. Hier ist auch sehr deutlich der in Umfangsrichtung variierende Querschnitt der Spiralhaut 7 zu sehen. Problematisch bei dieser Ausführung ist auch, dass durch schwankende Drücke beim Wasserzustrom im Einlauf die Gefahr besteht, dass sich die Befestigungsschrauben 8 lockern und herausfallen. Durch die losen Leitbleche können Zerstörungen in der Turbine entstehen. Weiters wird der Wirkungsgrad der Anlage durch das dann nicht mehr korrekt befestigte Leitblech 5 reduziert.

Fig. 4 zeigt einen Ausschnitt gemäß Fig. 3 mit einem erfindungsgemäßen Leitsegment 9. Man erkennt hier die Kontur 10 der Leitsegmente 9, die an die Spiralhaut 7 angepasst sind. Beim engeren Querschnitt der Spirale ergibt sich die Position der Spiralhaut 7' und die daran angepasste Kontur 10' des entsprechenden Leitsegmentes 9.
Das Leitelement setzt sich erfindungsgemäß aus einer Vielzahl von Leitsegmenten 9 zusammen, die mittels Schrauben 11 mit der Stützschaufelwange 4 verbunden sind. Die Schrauben 11 sind im Leitsegment 9 durch eine Buchse 12 fixiert und werden in der Stützschaufelwange 4 durch einen Stopfen 13 gesichert. Die Leitsegmente 9 bestehen aus Kunststoff, wobei beim Gießen die Buchse 12 bereits eingegossen wird.
Zur Herstellung der erfindungsgemäßen Leitsegmente 9 gibt es mehrere Möglichkeiten.
Die aus Kunststoff bestehenden Leitsegmente 9 können durch einen Verguss auf der Baustelle erzeugt werden. Die Buchsen 12 zur Verschraubung durch die Stützschaufelwange 4 werden hier vorab mit den Halteschrauben 11 verschraubt. Es erfolgt eine segmentweise Verschalung in der Spirale 1, die mit Kunststoff ausgegossen wird, wobei vor dem Verguss ein Trennmittel auf die Innenseite der Spiralhaut 7 und Stützschaufelwange 4 aufgebracht wird, um die Leitsegmente nach dem Verguss aus dieser Form zu entnehmen und entsprechend für die Endmontage vorzubereiten. Dadurch weisen die einzelnen Leitsegmente dann die passende Form auf und es gibt keinerlei Hohlräume zwischen Leitsegment 9 und Spiralhaut 7. Alternativ können die Leitsegmente in einer Form gegossen werden, die für alle Segmente gleich ist und nachträglich durch mechanische Bearbeitung an die sich umlaufend ändernde Kontur der Spiralhaut 7, 7' angepasst werden. Die Buchsen 12 zur Verschraubung mit der Stützschaufelwange 4 werden hier ebenfalls gleich mit eingegossen. Es ist hier auch eine Optimierung des Gussvolumens mit Hinblick auf eine Materialeinsparung möglich.

Die Leitsegmente 9 können auch durch Fräsen aus einem Halbzeug z.B. auf einer CNC Fräsmaschine, erzeugt werden. Hier ist für die Buchsen 12 eine Ausfräsung 13 (siehe Fig. 5a, 5b) vorzusehen, in die die Buchsen 12 zur Verschraubung vor der Montage eingesetzt werden. Es können auch Ringsegmente und Zylinder aus Kunststoff zur Formung eines Leitsegmentes 9 verschweißt werden, wobei auch ein zusätzliches Einschweißen von Aussteifungsrippen möglich ist.
Fig. 5a zeigt eine 3-D-Ansicht eines erfindungsgemäßen Leitsegmentes 9 aus Kunststoff von der Spiralseite, wobei hier auch beispielhaft die Aüsfräsungen 13 bei einer Herstellung durch Fräsen aus einem Halbzeug dargestellt sind. Beim Gießen der Leitsegmente 9 entfallen natürlich die Ausfräsungen 13.
Fig. 5b zeigt die 3-D-Ansicht von der Wasserseite. Aus diesen Figuren ist auch eine Optimierung des Volumens erkennbar.

## Patentansprüche

1. Spiralgehäuse einer Strömungsmaschine, insbesondere Turbine, Pumpe oder Pumpturbine, die aus einer Anzahl von in Umfangsrichtung hintereinander angeordneten und an den jeweiligen Stirnseiten miteinander verbundenen Segmenten (2) besteht, mit Leiteinrichtungen am Einlauf zu den Stützschaufeln (3), **dadurch gekennzeichnet, dass** einzelne Leitsegmente (9) vorgesehen sind, die aus Kunststoff bestehen.

2. Spiralgehäuse nach Anspruch 1, **dadurch gekennzeichnet, dass** die Leitsegmente (9) aus Kunststoff gegossen sind.

3. Spiralgehäuse nach einem der Ansprüche 1 oder 2, **dadurch gekennzeichnet, dass** die Leitsegmente (9) mit der am Einlauf der Stützschaufel (3) angeordneten Stützschaufelwange (4) verschraubt sind.

4. Spiralgehäuse nach Anspruch 3, **dadurch gekennzeichnet, dass** die Leitsegmente (9) Buchsen (12) zur Verschraubung aufweisen.

5. Spiralgehäuse nach einem der Ansprüche 1 bis 4, **dadurch gekennzeichnet, dass** die Leitsegmente (9) an die Form des Spiralgehäuses (1) angepasst sind.

6. Verfahren zur Fertigung eines Spiralgehäuses einer Strömungsmaschine und deren Leiteinrichtungen nach Anspruch 1, **dadurch gekennzeichnet, dass** die Leitsegmente (9) aus Kunststoff gegossen werden.

7. Verfahren nach Anspruch 6, **dadurch gekennzeichnet, dass** im Spiralgehäuse (1) eine Verschalung, insbesondere segmentweise, angebracht und mit Kunststoff ausgegossen wird, wodurch die Leitsegmente (9) geformt werden.

8. Verfahren nach Anspruch 7, **dadurch gekennzeichnet, dass** die Leitsegmente (9) mit der am Einlauf der Stützschaufel (3) angeordneten Stützschaufelwange (4) verschraubt werden.

9. Verfahren nach Anspruch 6, **dadurch gekennzeichnet, dass** die Leitsegmente (9) in einer Form gegossen werden.

10. Verfahren nach Anspruch 9, **dadurch gekennzeichnet, dass** die gegossenen Leitsegmente (9) durch mechanische Bearbeitung an die sich umlaufend verändernde Spiralkontur (7, 7') angepasst werden.

## Claims

1. Spiral casing of a turbo-machine, in particular a turbine, pump, or pump turbine, consisting of a number of segments (2) that are arranged one after the other in circumferential direction and are connected to one another at the respective face ends, having guide devices at the inlet to the support blades (3), **characterized by** individual guide segments (9) being provided that are made of plastic.

2. Spiral casing according to Claim 1, **characterized by** the guide segments (9) made of plastic being cast.

3. Spiral casing according to one of Claims 1 or 2, **characterized by** the guide segments (9) being screwed to the support blade flank (4) located at the inlet of the support blade (3).

4. Spiral casing according to Claim 3, **characterized by** the guide segments (9) having female connectors (12) for the screw connection.

5. Spiral casing according to one of Claims 1 to 4, **characterized by** the guide segments (9) being adapted to the shape of the spiral casing (1).

6. Method for producing a spiral casing of a turbo-machine and its guide devices according to Claim 1, **characterized by** the guide segments (9) made of plastic being cast.

7. Process according to Claim 6, **characterized by** formwork being assembled in the spiral casing (1), particularly in segments, and filled with plastic casting, causing the guide segments (9) to be shaped.

8. Process according to Claim 7, **characterized by** the guide segments (9) being screwed to the support blade flank (4) at the inlet of the support blade (3).

9. Process according to Claim 6, **characterized by** the guide segments (9) being cast in a mold.

10. Process according to Claim 9, **characterized by** the cast guide segments (9) being machined in order to adapt them to the spiral contour (7, 7'), which changes around the circumference.

## Revendications

1. Bâche spirale d'une turbomachine, notamment d'une turbine, pompe ou turbine-pompe, qui est composée d'un certain nombre de segments (2) disposés l'un après l'autre au sens périphérique et reliés l'un à l'autre sur leurs faces avants respectives, et pourvue d'éléments de guidage à l'entrée aux aubes de support (3), **caractérisée en ce que** des segments de guidage (9) individuels sont prévus, qui sont en plastique.

2. Bâche spirale selon la revendication 1, **caractérisée en ce que** les segments de guidage (9) en plastique sont coulés.

3. Bâche spirale selon l'une des revendications 1 ou 2, **caractérisée en ce que** les segments de guidage (9) sont vissés à la joue (4) de l'aube de support (3), qui est disposée à l'entrée à l'aube de support (3).

4. Bâche spirale selon la revendication 3, **caractérisée en ce que** pour le vissage, les segments de guidage (9) comportent des connecteurs femelles (12).

5. Bâche spirale selon l'une des revendications 1 à 4, **caractérisée en ce que** les segments de guidage (9) sont adaptés à la forme de la bâche spirale (1).

6. Méthode de fabrication d'une bâche spirale d'une turbomachine et de ses éléments de guidage selon la revendication 1, **caractérisée en ce que** les segments de guidage (9) en plastique sont coulés.

7. Méthode selon la revendication 6, **caractérisée en ce que** qu'un coffrage est disposé dans la bâche spirale (1), notamment par segments, et rempli de matière plastique, ce qui cause la formation des segments de guidage (9).

8. Méthode selon la revendication 7, **caractérisée en ce que** les segments de guidage (9) sont vissés à la joue (4) de l'aube de support (3), qui est disposée à l'entrée à l'aube de support (3).

9. Méthode selon la revendication 6, **caractérisée en ce que** les segments de guidage (9) sont coulés dans un moule.

10. Méthode selon la revendication 9, **caractérisée en ce que** les segments de guidage (9) coulés sont adaptés au contour (7, 7') de la bâche spirale par l'usinage, ce contour changeant autour de la circonférence.
